# EUROPÄISCHE PATENTANMELDUNG

(11) **EP 1 886 849 A1**
(43) Veröffentlichungstag der Anmeldung: **13.02.2008**
(21) Anmeldenummer: 07012032.4
(22) Anmeldetag: 20.06.2007
(51) Int. Cl.: B60G 17/019

(54) **Radaufhängung für ein Kraftfahrzeug**

(30) Priorität: 09.08.2006 DE 102006037428
(71) Anmelder: Benteler Automobiltechnik GmbH, 33104 Paderborn (DE)
(72) Erfinder: Kollmeier, Marco, 33602 Bielefeld (DE); Rabe, Frank, 32120 Hiddenhausen (DE); Böke, Johannes, Dr., 32825 Blomberg (DE)
(74) Vertreter: Ksoll, Peter

(57) **Zusammenfassung**

Die Erfindung betrifft eine Radaufhängung für ein Kraftfahrzeug, der eine Sensoreinheit (31a) zugeordnet ist. Erfindungsgemäß weist die Sensoreinheit (31a) wenigstens einen Dehnungssensor (55) und wenigstens einen Beschleunigungssensor (56) auf.

## Beschreibung

Die Erfindung betrifft eine Radaufhängung für ein Kraftfahrzeug, der eine Sensoreinheit zugeordnet ist, die mit einem Steuergerät gekoppelt ist.

Eine Vorrichtung zur Schwingungsüberwachung der Radsysteme insbesondere von Kraftfahrzeugen während des Fahrbetriebs ist aus der DE 38 17 809 A1 im Stand der Technik bekannt. Hiernach ist der Lagerung oder der Aufhängung eines jeden Fahrzeugrades ein Beschleunigungssensor als Schwingungsaufnehmer zugeordnet. Dieser ist mit einem Steuergerät verbunden, das die Schwingungssignale einzeln verarbeitet und in einer Auswerteeinheit zur Anzeige bringt.

Als nachteilig an dieser Vorrichtung zur Schwingungsüberwachung hat sich erwiesen, dass lediglich Beschleunigungen erfassbar sind. Auf diese Weise lassen sich keine statischen Kräfte erfassen, die z. B. eine Überladung, eine zu hohe Anhänglast, Schleppen bei blockiertem Rad oder Fehler bei der Einstellung des Fahrwerks anzeigen würden.

Die DE 100 33 046 A1 beschreibt eine Regelungseinrichtung zur Regelung einer Luftfederung eines Radfahrzeugs in Abhängigkeit erfasster Radlasten. Hierzu ist die Regelgunseinrichtung mit einem Sensorsystem versehen, durch dass die jeweilige Radlast der einzelnen Räder des Fahrzeugs erfasst wird. Hieraus ist eine Radaufhängung für ein Kraftfahrzeug bekannt, der eine Sensoreinheit zugeordnet ist, die mit einem Steuergerät gekoppelt ist. Weiterhin sind ein Dehnungssensor und ein Beschleunigungssensor getrennt von einander vorhanden.

Der Erfindung liegt daher die Aufgabe zugrunde, eine Radaufhängung für ein Kraftfahrzeug anwendungstechnisch zu verbessern, so dass alle am Fahrwerk angreifenden statischen und dynamischen Kräfte im laufenden Fahrbetrieb erfassbar sind.

Kernpunkt der Erfindung ist, dass die Sensoreinheit wenigstens einen Dehnungssensor und wenigstens einen Beschleunigungssensor aufweist und ein zentrales Teil umfasst von dem aus sich mindestens ein mit einem Gewinde versehener Bolzen erstreckt und das in einem hülsen- oder taschenförmigen Gehäuse angeordnet ist.

Die Vorteile der Erfindung sind, dass nunmehr Dehnungen, Schwingungen und Stöße im laufenden Fahrbetrieb erfassbar sind. Im Bereich der Dehnung sind Überladungen, zu hohe Beschleunigungen, zu hohe Anhänglasten, das Schleppen bei blockiertem Rad sowie seitlicher Zug, Kurvenfahrt und Spurrillen erfassbar. Durch die Messung von Schwingungen können Unwuchten am Rad, defekte Dämpfer, die Untergrundbeschaffenheit, z. B. Kopfsteinpflaster das Rutschen über den Untergrund, sowie Achsspur- und Radstandfehler erfasst werden. Die Erfassbarkeit von Stößen ist insbesondere bei Schlaglochdurchfahrten, Schwellenüberfahrten und zur Detektion von defekten Federn vorteilhaft.

Die von der Sensoreinheit aufgenommenen Daten sind als Steuergrößen in diverse Systeme von modernen Kraftfahrzeugen einspeisbar, wie z. B. aktive Fahrwerke, Belastungs- und Schädigungswarngeräte ("Misuse Detector"), Belastungsprotokollgeräte ("Black box" oder "Misuse Recorder") sowie modellbasierte Lebensdauerbeobachtungssysteme.

Insgesamt wird ein Sicherheitsgewinn für den Fahrzeugführer sowie für die Fahrzeuginsassen und andere Verkehrsteilnehmer erreicht. Die Erfassung stellt zudem ein Informationsgewinn und eine Kostenersparnis für den Kraftfahrzeug-oder den Fuhrparkbetreiber dar. Mithin können Reparaturen rechtzeitig veranlasst werden, so dass Schadensfortschritte und Folgeschäden vermieden werden können und erhöhtem Reifenverschleiß und Kraftstoffbedarf vorgebeugt werden können. Der Komfort wird durch die Erfassung von Geräuschen, Vibrationen und anderen Rauheiten, auch bekannt als "Noise, Vibration and Harshness" vermieden. Die regelmäßig durchzuführenden Fahrzeuginspektionen und Diagnosen in der Werkstatt können verkürzt werden. Die Begutachtung von Zweifels- und Schadensfällen wird ebenfalls vereinfacht und verkürzt. Letztlich ist auch eine Qualitätssicherung durch Überwachung der Radaufhängung nach einer Radmontage und/oder einer Spureinstellung durch den Kraftfahrzeughersteller oder eine Werkstatt möglich.

Im Rahmen der Erfindung kann die Sensoreineit grundsätzlich jeder Art von Radaufhängung zugeordnet werden, insbesondere kann die Sensoreinheit an der Vorder- und/oder Hinterachse eines Kraftfahrzeuges vorgesehen sein. Vorstellbar ist darüber hinaus die Zuordnung der Sensoreinheit zu achslosen Radaufhängungen sowie Radaufhängungen von dreirädrigen Fahrzeugen.

Vorteilhafte Ausführungsformen und Weiterbildung der Erfindung sind Gegenstand der abhängigen Ansprüche 2-32.

Ein zentraler Teil der Sensoreinheit ist, wie erwähnt, in einem hülsen- oder taschenförmigen Gehäuse angeordnet. In diesem hülsen- oder taschenförmigen Gehäuse ist die Sensoreinheit in einer geschützten Lage untergebracht. Dabei kann das Gehäuse eine kreisförmige, elliptische oder polygonale Grundform haben, wobei die kreisförmige und die rechteckige Grundform bevorzugt sind. Das Gehäuse besteht aus einem Metall, einer Metalllegierung oder einem Faserverbundwerkstoff. Besonders vorteilhaft ist es, wenn das Gehäuse mit einem Fahrwerksbauteil stoffschlüssig verbunden, vorzugsweise verschweißt, ist. Auf diese Weise können die zwischen dem Rad und dem Fahrwerk wechselwirkenden Kräfte direkt und ohne nachweisbare Effizienzverluste an die Sensoreinheit übertragen werden. Das Gehäuse kann aber auch mit dem Fahrwerksbauteil form- oder kraftschlüssig verbunden oder in die Kontur des Fahrwerksbauteils integriert sein. Unter Fahrwerksbauteilen werden im Rahmen der Erfindung beispielsweise Längslenker, Querlenker, Achsschenkel, Vorderachshilfsrahmen (Fahrschemel) verstanden.

Vorteilhafterweise sind durch die Sensoreinheit zwei Bauteile gekoppelt. An der Schnittstelle zwischen zwei Bauteilen lassen sich die Kräfte, die zwischen diesen Bauteilen wirken, besonders effizient erfassen.

Zweckmäßigerweise ist durch die Sensoreinheit das Fahrwerksbauteil mit einer Radträgereinheit gekoppelt. Auf diese Weise können sämtliche, an der Schnittstelle zwischen dem Fahrwerksbauteil und der Radträgereinheit angreifenden Kräfte erfasst und zur Auswertung gebracht werden.

Der Dehnungssensor ist in einem mit einem Gewinde versehenen Bolzen der Sensoreinheit angeordnet. Dies hat zwei Vorteile: Zum einen hat der Bolzen eine definierte Längsachse bezüglich der eine Dehnung erfassbar ist und zweitens ermöglicht das Gewinde eine Festlegung der Sensoreinheit an einem angrenzenden Bauteil.

Der Bolzen ist aus einem Material mit einem Elastizitätsmodul im Bereich von 7*10⁵ N/mm² (z. B. Aluminium) bis 2*10⁵ N/mm² (z. B. V2A-Stahl). Zur Erfassung von Dehnungen ist eine Elastizität des Bolzens erforderlich. Vorteilhaft ist es, wenn diese Elastizität definiert ist und die Dehnung im Messbereich proportional zur Stärke der einwirkenden Kräfte ist.

Der Beschleunigungssensor ist entweder in einem zentralen Teil der Sensoreinheit oder in einem Bolzen untergebracht. Insbesondere die Unterbringung im zentralen Teil hat den Vorteil, dass durch die Anordnung der Sensoreinheit in dem Gehäuse die von dem rotierenden oder beschleunigten Rad ausgehenden Schwingungen direkt auf den Beschleunigungssensor im Schnittpunkt der Raumrichtungen übertragen werden.

In besonders vorteilhafter Weise umfasst die Sensoreinheit mehrere Bolzen, welche sich vom zentralen Teil aus erstrecken und einen rechten Winkel zueinander aufweisen. In diesen Bolzen sind jeweils Dehnungssensoren angeordnet, so dass Dehnungen in mehreren voneinander unabhängigen Raumrichtungen erfassbar sind.

Weiterhin ist es vorteilhaft, wenn mehrere Beschleunigungssensoren vorgesehen sind, deren Erfassungsrichtungen sich voneinander unterscheiden. Auf diese Weise lassen sich nicht nur Dehnungen, sondern auch Beschleunigungen in unterschiedliche Richtungen erfassen. Der Beschleunigungssensor kann jedoch auch als ein mehrachsiger Beschleunigungssensor ausgeführt sein. Auf diese Weise wird durch eine höhere Bauteilintegration Bauraum eingespart.

Die Sensoreinheit und das Steuergerät sind entweder drahtlos oder drahtgebunden miteinander gekoppelt. Die drahtgebundene Kopplung ist besonders robust und einfach herzustellen, während eine drahtlose Übertragung per Funk, Infrarot oder Schallwellen erfolgen kann. Im Falle einer drahtlosen Übertragung ist eine Schnittstelle der Sensoreinheit mit entsprechenden Sendeeinrichtungen auszustatten.

Die Sensoreinheit weist eine Signalverarbeitungseinheit auf. Mit der Signalverarbeitungseinheit können die von den Beschleunigungs- und Dehnungssensoren aufgenommenen Signale vorteilhaft verarbeitet und auf digitalem oder analogem Wege an das Steuergerät übertragen werden. Hierbei können die Signale vorteilhaft verdichtet werden, so dass die Informationen bezüglich der Dehnungen und Beschleunigungen als sogenannte Datentelegramme an das Steuergerät versendbar sind.

Die Sensoreinheit weist eine Energiequelle auf. Da die Sensoreinheit im Fahrbetrieb dynamischen Schwingungen unterworfen ist, können diese Schwingungen vorteilhaft zur Energieerzeugung genutzt werden. Die Energiequelle kann auf einem Piezokristall oder einem Generator basieren. Ferner sind Batterien und Akkumulatoren als Energiequelle vorstellbar. Falls keine Energiequelle in der Sensoreinheit vorgesehen ist, erfolgt die Energieversorgung der Sensoreinheit über Drahtleitungen oder mittels induktiver Energieübertrager.

Die Sensoreinheit ist lösbar an dem Fahrwerksbauteil befestigt. Dies ermöglicht es, die Sensoreinheit bei Bedarf auszutauschen. Die lösbare Verbindung kann eine Steck- oder Schraubverbindung sein.

In einer vorteilhaften Ausführungsform weist die Sensoreinheit eine Aufnahme für ein Radlager auf. Dies ermöglicht eine integrierte und damit bauraumsparende Anordnung der Sensoreinheit, vorzugsweise im Zentrum eines Achsschenkels.

Das Gehäuse weist einen Einführschlitz für den Bolzen auf. Sollten mehrere Bolzen zum Einsatz gelangen, kann das Gehäuse auch mehrere Einführschlitze aufweisen. Ferner ist für einen Bolzen, der sich in Längsrichtung des Gehäuses erstreckt, eine Bohrung in einem Gehäuseboden vorgesehen.

Der Dehnungssensor kann wahlweise als Dehnungsmessröhrchen, Dehnungsmessstreifen, Messstäbchen sowie als induktiver, kapazitiver oder piezoelektrischer Wegaufnehmer ausgeführt sein. Der Dehnungssensor kann dabei in eine zur Längsachse des Bolzens koaxiale Bohrung eingesetzt, insbesondere eingeklebt, sein. Die Bohrung kann aber auch in einen Winkel von vorzugsweise 45° zur Längsachse aufweisen. Der Beschleunigungssensor ist vorteilhafterweise entweder ein ohmscher, induktiver, kapazitiver oder piezoelektrischer Beschleunigungssensor.

Die Erfindung ist nachfolgend anhand von in den Zeichnungen dargestellten Ausführungsbeispielen näher erläutert. Es zeigen:
- Figuren 1A-B: zwei erfindungsgemäße Radaufhängungen anhand einer Verbundlenkerachse in einer perspektivischen Darstellung;
- Figur 2: eine dritte Ausführungsform der Radaufhängung;
- Figuren 3A-3B: zwei Ausführungsformen der Sensoreinheit perspektivischen Ansichten;
- Figuren 4A-4D: drei Seitenansichten und einen Querschnitt einer Sensoreinheit mit einem Bolzen;
- Figuren 5A-5D: drei Seitenansichten und einen Querschnitt einer Sensoreinheit mit zwei Bolzen;
- Figuren 6A-6D: drei Seitenansichten und einen Querschnitt einer Sensoreinheit mit drei Bolzen;
- Figur 7: eine vierte Ausführungsform der Radaufhängung;
- Figur 8: eine fünfte Ausführungsform der Radaufhängung und
- Figur 9: eine sechste Ausführungsform der Radaufhängung.

Gleiche oder ähnliche Merkmale in den Figuren sind mit identischen Bezugszeichen versehen.

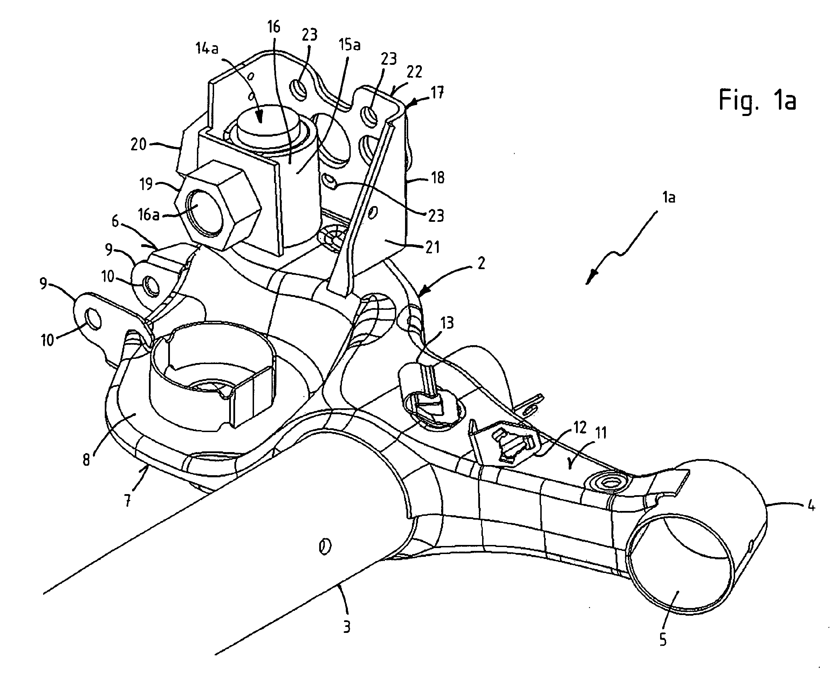

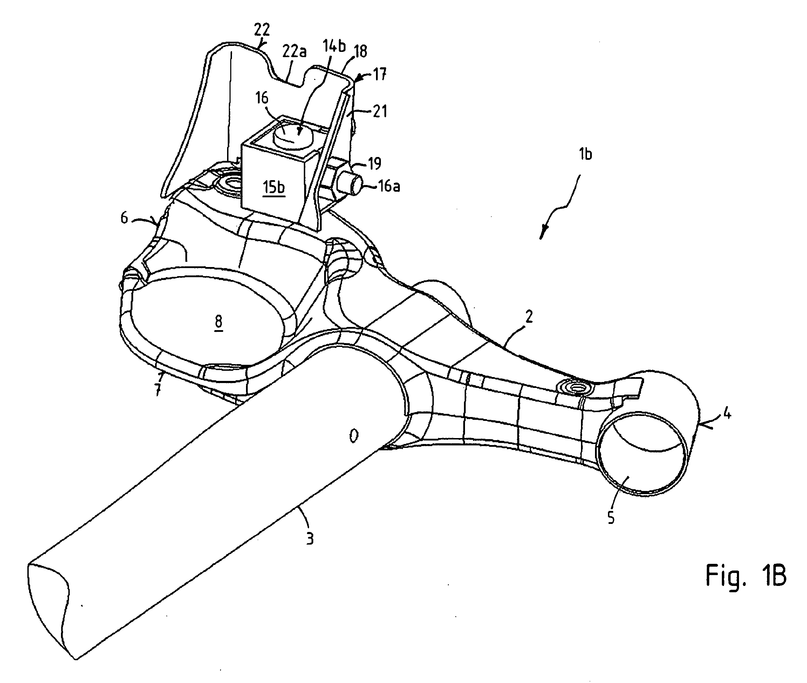

In den Figuren 1 A und 1 B sind erfindungsgemäße Radaufhängungen 1 a und 1b in Form einer Verbundlenkerachse dargestellt. Ein Längslenker 2 ist mit einem Querträger 3 verbunden. An seinem vorderen Ende 4 weist der Längslenker 2 eine Lagerschale 5 auf, über die der Längslenker 2 mit einem nicht näher dargestellten Lager an einen Fahrzeugaufbau anbindbar ist. An seinem hinteren Ende 6 weist der Längslenker 2 auf der Innenseite 7 eine Aufnahme 8 für eine Schraubenfeder auf. Des Weiteren sind am hinteren Ende 6 zwei Laschen 9 vorgesehen, deren Bohrungen 10 fluchtend sind. An diesen Laschen 9 kann eine Dämpfereinheit befestigt werden. Auf der Oberseite 11 des Längslenkers 2 sind mehrere Laschen 12, 13 zur Befestigung von Leitungen vorgesehen.

Am hinteren Ende 6 des Längslenkers 2 der Figur 1A ist eine Sensoreinheit 14a vorgesehen. Die Sensoreinheit 14 ist von einem hülsenförmigen Gehäuse 15a umgeben, das mit dem Lenker 2 verschweißt ist. Der zentrale Teil 16 der Sensoreinheit 14a ist im Gehäuse 15a in einer geschützten Lage aufgenommen und weist drei Bolzen 16a auf, die jeweils mit einem Gewinde versehen sind und die sich in den drei Richtungen des Raums X, Y, Z vom zentralen Teil 16 der Sensoreinheit 14 aus erstrecken. In der Figur 1A ist lediglich der Bolzen 16a in X-Richtung sichtbar.

Die Sensoreinheit 14 koppelt den Längslenker 2 mit einer Radträgereinheit 17. In der Figur 1A ist ein Radträgerblech 18 dargestellt, das an der Sensoreinheit 14 mit Muttern 19, 20 festgeschraubt ist. Um das Radträgerblech 18 auf die Bolzen 16a der Sensoreinheit 14 aufstecken zu können, sind im Radträgerblech 18 an den entsprechenden Stellen Langlöcher vorgesehen. Das Radträgerblech 18 umgibt dabei die Sensoreinheit 14 an drei Seiten und besitzt einen vorderen Schenkel 21, der sich im Abstand zur Sensoreinheit 14 befindet. Das Radträgerblech 18 weist an der Außenseite 22 drei Bohrungen 23 auf, über die ein Achszapfen am Radträgerblech 18 befestigbar ist.

Im Unterschied zur Figur 1A ist die Radaufhängung der Figur 1B mit einer Sensoreinheit 14b ausgerüstet, die ein rechteckiges Gehäuse 15b aufweist. Die Sensoreinheit ist an zwei Seiten am vorderen Schenkel 21 sowie am außen liegenden Steg 22a des Radträgerblechs montiert.

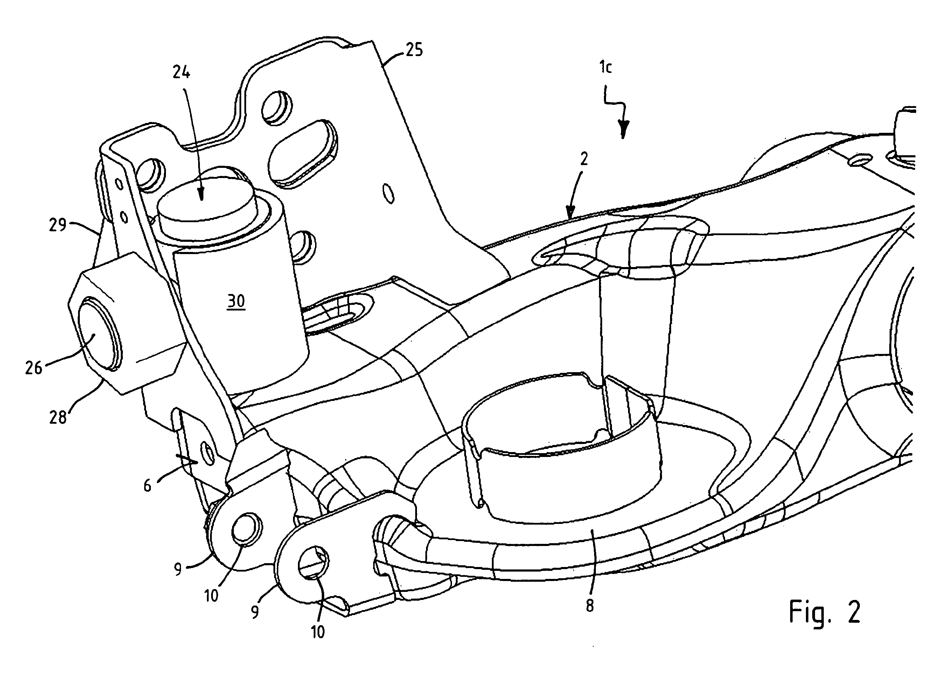

In der Figur 2 ist ebenfalls eine Radaufhängung 1c mit einem Längslenker 2 in einer perspektivischen Ansicht dargestellt. In diesem Fall handelt es sich um eine Ansicht von schräg hinten. Deutlich erkennbar ist die Aufnahme 8 für eine Schraubenfeder am hinteren Ende 6 des Längslenkers 2. Des Weiteren sind zwei Laschen 9 zur Befestigung eines Dämpfers vorgesehen. Am Längslenker 6 ist über einer Sensoreinheit 24 ein Radträgerblech 25 befestigt. Die Sensoreinheit 24 weist zwei Bolzen 26 auf, die mit einem Gewinde versehen sind und sich in X- und Y-Richtung erstrecken. Mit Muttern 28, 29 ist das Radträgerblech 25 an der Sensoreinheit 24 festgeschraubt. Die Sensoreinheit 24 ist in einem Gehäuse 30 angeordnet, das mit dem Längslenker 2 verschweißt ist.

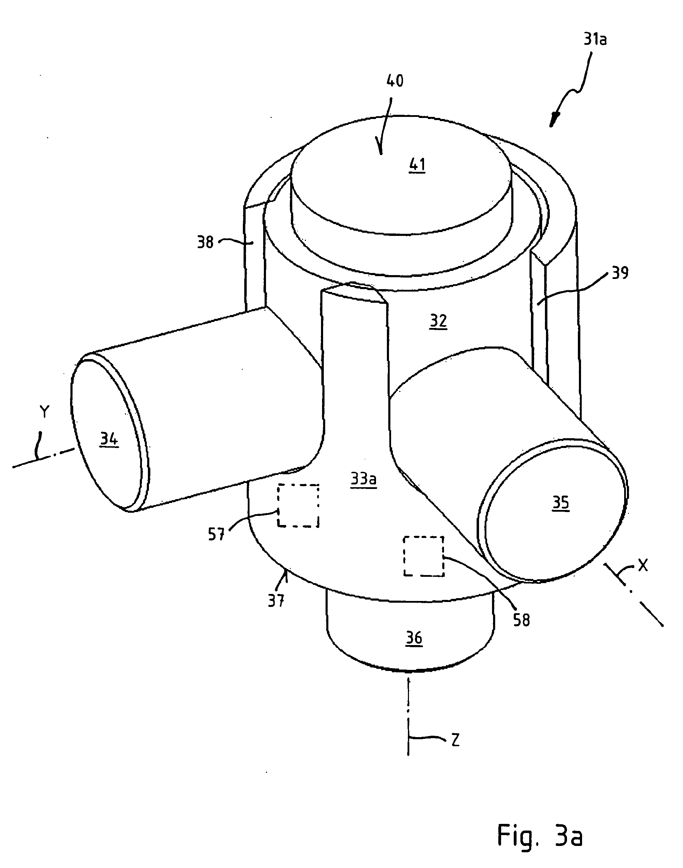

In den Figuren 3A und 3B sind zwei Sensoreinheiten 31 a, 31 b näher dargestellt. Die Sensoreinheit 31 a weist einen zentralen Teil 32 auf, der in einem hülsenförmigen Gehäuse 33a in geschützter Lage untergebracht ist. Die Sensoreinheit 31 b unterscheidet sich von der Sensoreinheit 31 a nur durch die Form des Gehäuses 33b, die rechteckig ist. Von dem zentralen Teil 32 aus erstrecken sich Bolzen 34-36 in den drei Achsen X, Y und Z des Raumes, wobei der Bolzen 36 in Z-Richtung durch eine Bohrung im Boden 37 des Gehäuses 33 gesteckt ist. Die Bolzen 34, 35 in der X- und der Y-Richtung sind in Einführschlitzen 38, 39 aufgenommen. Auf der Oberseite 40 der Sensoreinheiten 31 a und 31 b befindet sich ein Schutzkappe 41. Unterhalb der Schutzkappe 41 befindet sich eine nicht näher dargestellte Schnittstelle für die drahtlose oder drahtgebundene Daten- und Energieübertragungzwischen der Sensoreinheit 41 und einem Steuergerät. In der Figur 3B sind Muttern 41a auf die Bolzen 34-36 geschraubt.

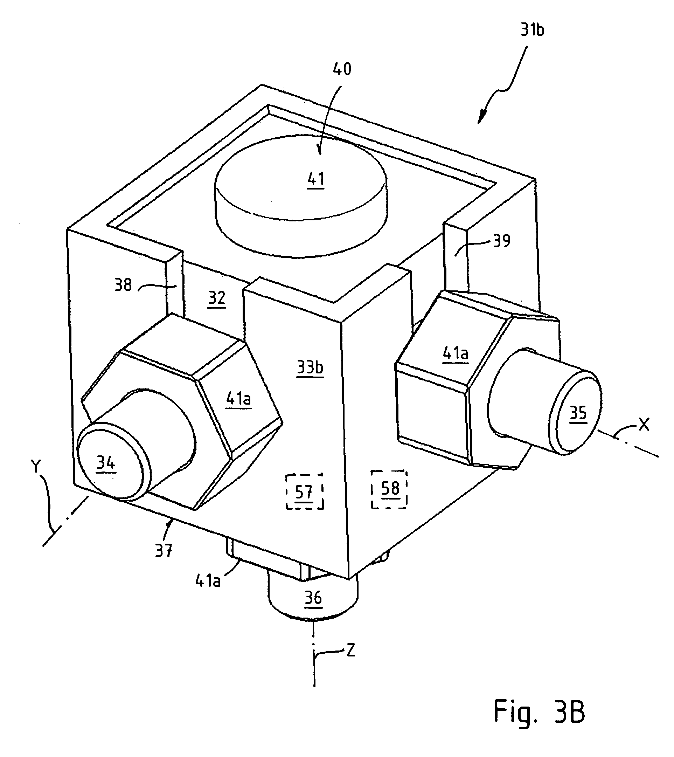

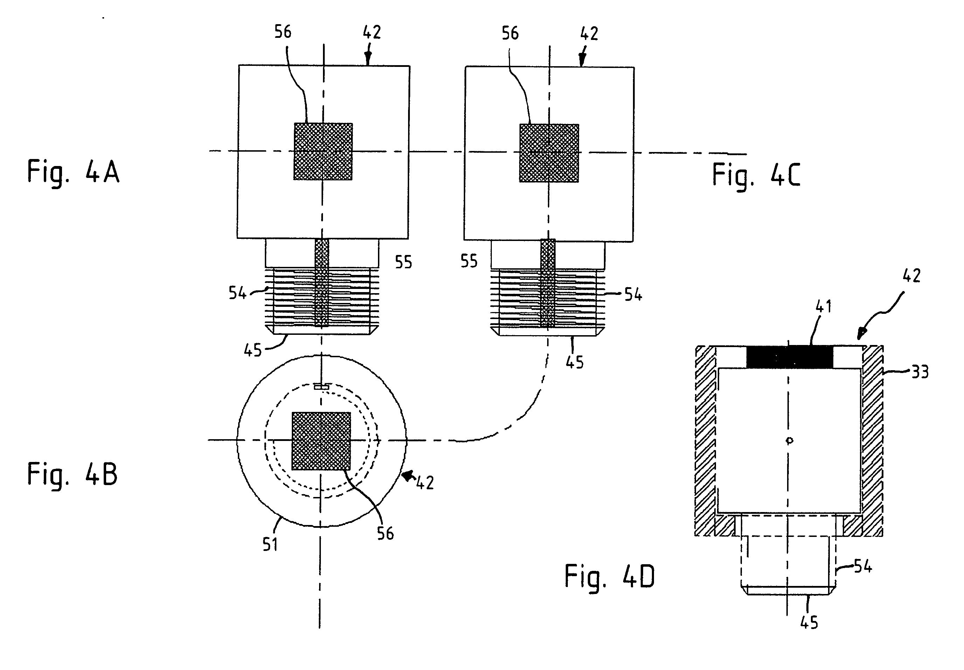

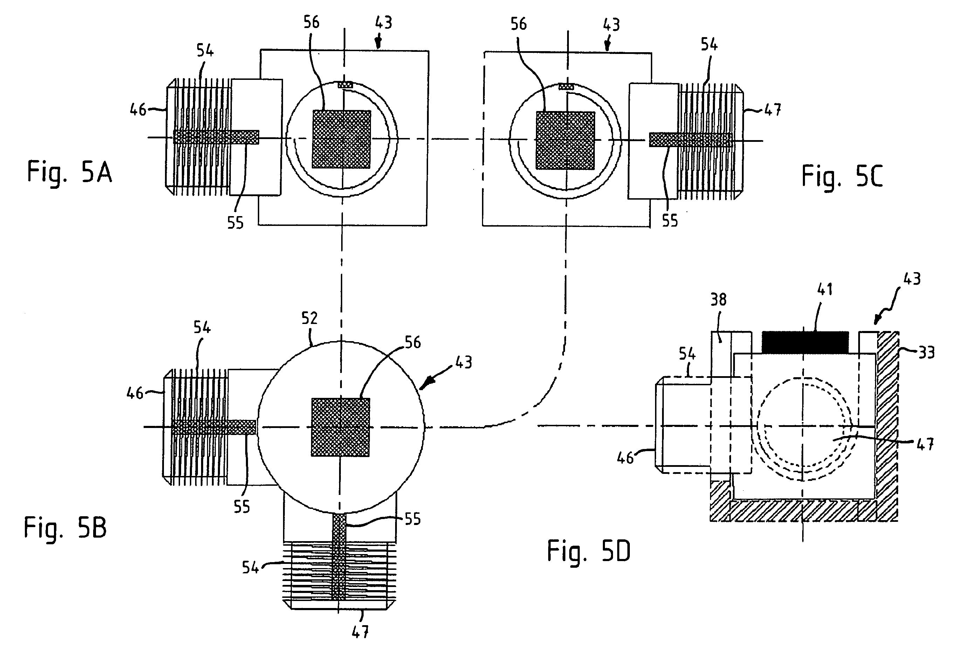

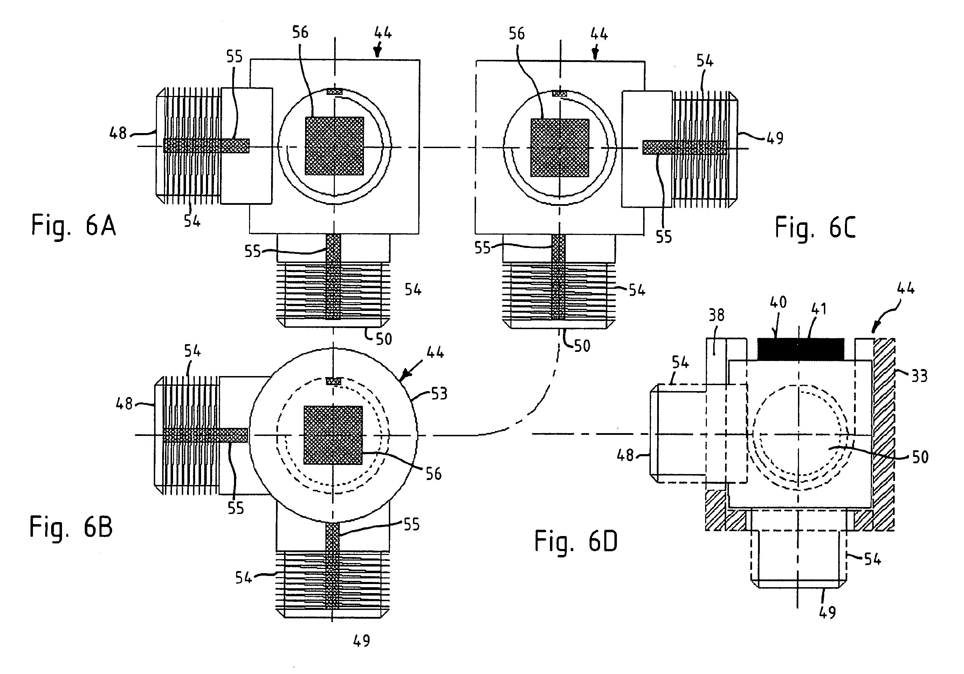

In den Figuren 4A-4D, 5A-5D und 6A-6D sind drei Ausführungsformen der erfindungsgemäßen Sensoreinheit 42-44 dargestellt. Sie unterscheiden sich darin, dass die Sensoreinheit 42 in den Figuren 4A-4D einen Bolzen aufweist, während die Sensoreinheit 43 in den Figuren 5A-5D zwei Bolzen 46, 47 in X-und Y-Richtung besitzt und die Sensoreinheit 45 in den Figuren 6A-6D drei Bolzen 48-50 hat, die sich in X-, Y- und Z-Richtung erstrecken.

Deutlich erkennbar ist, dass die Sensoreinheiten 42-44 einen zentralen Teil 51-53 besitzen, von dem aus sich wenigstens ein Bolzen 45-50 in einer Richtung erstreckt. Jeder Bolzen 45-50 ist endseitig mit einem Gewinde 54 versehen. In Bohrungen entlang der Längsachsen LAB der Bolzen sind Dehnungssensoren 55 in Form eines Dehnungsmessröhrchens angeordnet. Die Dehnungsmessröhrchen sind mit einem härtenden Klebstoff in die jeweilige Bohrung im Bolzen 45-50 eingeklebt. Die Bolzen 45-50 bestehen aus einem elastischen Material, insbesondere aus einem Metall mit einem Elastizitätsmodul zwischen 0,7*10⁵ N/mm² bis 2*10⁵ N/mm². In den zentralen Teilen 51-53 sind mehrachsige Beschleunigungssensoren 56 angordnet. Mit diesen Beschleunigungssensoren 56 sind Schwingungen eines radtragenden Fahrwerksbauteils wie beispielsweise eines Längslenkers 2 (vgl. Figuren 1A, 1B Bund 2) in den drei Richtungen X, Y, Z des Raumes erfassbar. Als Beschleunigungssensoren 56 eignen sich ohmsche Beschleunigungssensoren, induktive Beschleunigungssensoren, kapazitive Beschleunigungssensoren und piezoelektrische Beschleunigungssensoren. In den Zeichnungen sind jeweils piezoelektrische Beschleunigungssensoren 56 vorgesehen.

Die Sensoreinheiten 31, 42-45 weisen auf der Oberseite 40 einen Schutzkappe 41 auf, unter der sich eine nicht näher dargestellte Schnittstelle für die Daten-und Energieübertragung zu dem Steuergerät, das im oder an einem Fahrzeug angeordnet ist, befindet. Die einzelnen Sensoren 55, 56 der Sensoreinheiten 31, 42-45 sind mit einer Signalverarbeitungseinheit 57 verbunden, die im zentralen Teil 32, 52-54 wiederum mit dem Schnittstelle gekoppelt ist. Zwischen der Sensoreinheit 31, 42-45 und dem Steuergerät werden die Daten digital und drahtlos übertragen. Die erfassten Messwerte werden in der Signalverarbeitungseinheit 57 verarbeitet und komprimiert in Form von Datentelegrammen an das Steuergerät gesandt.

Im zentralen Teil der Sensoreinheit ist des Weiteren eine Energiequelle 58 vorgesehen. Die Energiequelle 58 ist hier eine piezoelektrische Energieerzeugungseinheit.

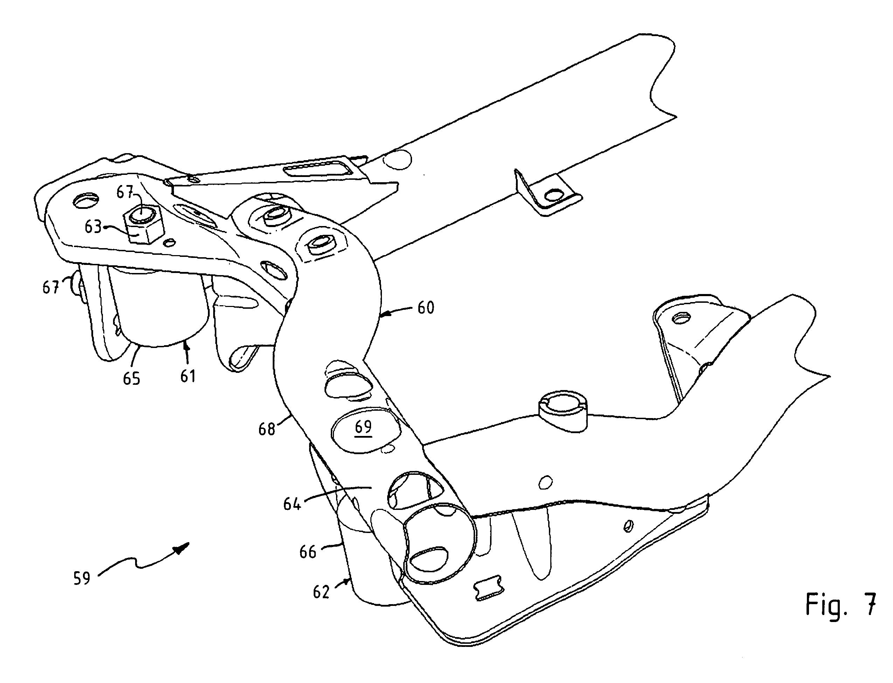

In der Figur 7 ist ausschnittsweise eine erfindungsgemäße Radaufhängung 59 mit einem Fahrschemel 60 dargestellt. Man erkennt zwei Sensoreinheiten 61, 62 mit rundem Querschnitt, die an den Anbindungspunkten 63, 64 für einen Dreieckslenker oder einen Querlenker bei Verwendung eines McPherson-Federbeins angeordnet sind. Die Gehäuse 65, 66 der Sensoreinheiten 61, 62 sind fest mit dem Fahrschemel 60 verbunden, vorzugsweise verschweißt. Die Sensoreinheiten 61, 62 verbinden über die Bolzen 67 die Anschlussbauteile, d.h. den Dreieckslenker bzw. den Querlenker, mit dem Fahrschemel 60. Am rohrförmigen Längsträger 68 des Fahrschemels sind auf der der Sensoreinheit 62 gegenüberliegenden Seite Montageöffnungen 69 vorgesehen, um Muttern auf den in den Längsträger 60 ragenden Bolzen schrauben zu können. Grundsätzlich ist es auch vorstellbar den rohrförmigen Längsträger 68 am Anbindungspunkt der Sensoreinheit taschenförmig einzudrücken und die Sensoreinheit in der so erzeugten Tasche anzuordnen. Ein Bolzen der Sensoreinheit würde dann durch beide Wände des Längsträgers 68 gesteckt, so dass die Montageöffnung 69 entfallen könnte.

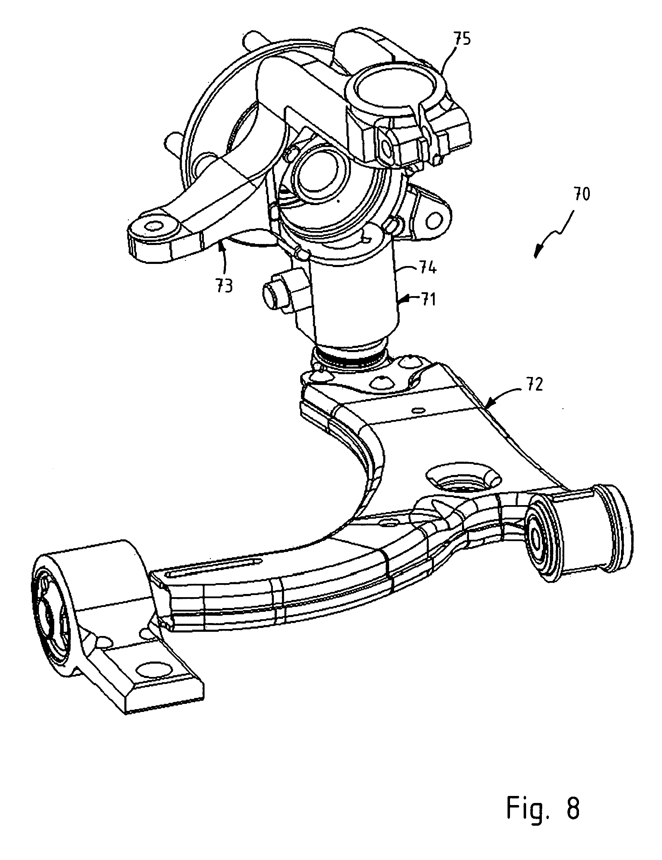

In der Radaufhängung 70 der Figur 8 ist die Sensoreinheit 71 zwischen dem Querlenker 72 für ein McPherson-Federbein und einem Schwenklager 73 angeordnet. Das Gehäuse 74 der Sensoreinheit 71 ist um die vertikale Achse drehbar am Schwenklager 73 befestigt. Es kommt daher eine zweiachsige Sensoreinheit 71 zum Einsatz, die nur Längs- und Querkräfte aus dem Schwenklager 73 aufnimmt.

Zusätzlich kann an der Schraubschelle 75 des Schwenklagers 73 eine weitere, hier nicht näher dargestellte Sensoreinheit befestigt sein, an der dann ein McPherson-Federbein moniterbar ist. Auf diese Weise können die vom Rad in das Federbein verlaufenden vertikalen Kräfte erfasst werden.

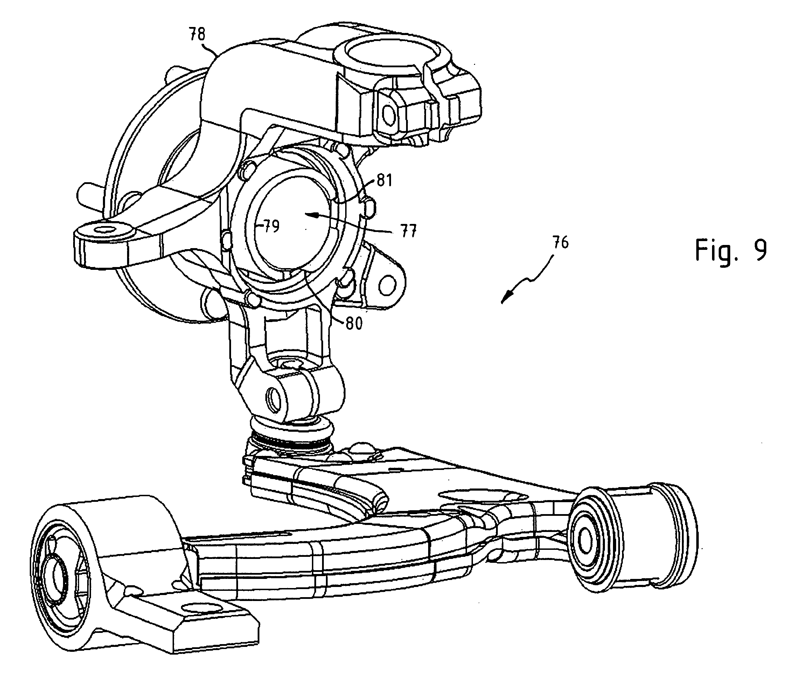

In der Radaufhängung 76 der Figur 9 ist die Sensoreinheit 77 im Zentrum des Schwenklagers 78 (auch als Achsschenkel bezeichnet) angeordnet. Die Gehäusekontur 79 mit den Einführschlitzen 80, 81 ist in das Schwenklager 78 als Gussteil durch eine entsprechende Gieform oder durch eine nachträgliche, spanabhebende Bearbeitung eingebracht. Für die Integration von Dehnungs-und Beschleunigungssensoren ist ein Zylinder erforderich, dessen Höhe dem Durchmesser der Bolzen enspricht. Die eigentliche Sensoreinheit 77 kann somit verhältnismäßig flach gestaltet werden. Die Sensoreinheit 77 kann mit einer Bohrung oder mit einem Rohr versehen werden, in welches das Radlager gepresst wird.

Mit der erfindungsgemäßen Radaufhängung 1 a, 1b, 1 c, 59, 70, 76 können nunmehr, die an der Verbindungsstelle zwischen einem Rad und einem radtragenden Fahrwerksbauteil wie beispielsweise einem Längslenker 2, Fahrschemel 60 oder Schwenklager 73, 78 angreifenden Kräfte in allen drei Raumrichtungen X, Y und Z erfasst werden. Weiterhin können Dehnungen und Schwingungen gemessen und auch Stöße zuverlässig erkannt werden. Auf diese Weise werden die Sicherheit und der Fahrkomfort erhöht und es werden die Kosten für das Halten eines Fahrzeugs verringert.

### Bezugszeichen:

- 1a -: Radaufhängung
- 1b -: Radaufhängung
- 1c -: Radaufhängung
- 2 -: Längslenker
- 3 -: Querträger
- 4 -: Vorderes Ende v. 2
- 5 -: Lagerschale
- 6 -: Hinteres Ende v. 2
- 7 -: Innenseite
- 8 -: Aufnahme
- 9 -: Lasche
- 10 -: Bohrung
- 11 -: Oberseite v. 2
- 12 -: Lasche
- 13 -: Lasche
- 14a -: Sensoreinheit
- 14b -: Sensoreinheit
- 15a -: Gehäuse
- 15b -: Gehäuse
- 16 -: Zentraler Teil
- 16a -: Bolzen
- 17 -: Radträgereinheit
- 18 -: Radträgerblech
- 19 -: Mutter
- 20 -: Mutter
- 21 -: Schenkel
- 22 -: Außenseite
- 22a -: Steg
- 23 -: Bohrungen
- 24 -: Sensoreinheit
- 25 -: Radträgerblech
- 26 -: Bolzen
- 28 -: Mutter
- 29 -: Mutter
- 30 -: Gehäuse
- 31a -: Sensoreinheit
- 31b -: Sensoreinheit
- 32 -: Zentraler Teil
- 33a -: Gehäuse
- 33b -: Gehäuse
- 34 -: Bolzen
- 35 -: Bolzen
- 36 -: Bolzen
- 37 -: Boden
- 38 -: Einführschlitz
- 39 -: Einführschlitz
- 40 -: Oberseite v. 31
- 41 -: Schutzkappe
- 41a -: Mutter
- 42 -: Sensoreinheit
- 43 -: Sensoreinheit
- 44 -: Sensoreinheit
- 45 -: Bolzen
- 46 -: Bolzen
- 47 -: Bolzen
- 48 -: Bolzen
- 49 -: Bolzen
- 50 -: Bolzen
- 51 -: Zentraler Teil
- 52 -: Zentraler Teil
- 53 -: Zentraler Teil
- 54 -: Gewinde
- 55-: Dehnungssensor
- 56 -: Beschleunigungssensor
- 57 -: Signalverarbeitungseinheit
- 58 -: Energiequelle
- 59 -: Radaufhängung
- 60 -: Fahrschemel
- 61 -: Sensoreinheit
- 62 -: Sensoreinheit
- 63 -: Anbindungspunkt
- 64 -: Anbindungspunkt
- 65 -: Gehäuse
- 66 -: Gehäuse
- 67 -: Bolzen
- 68 -: Längsträger
- 69 -: Montageöffnung
- 70 -: Radaufhängung
- 71 -: Sensoreinheit
- 72 -: Querlenker
- 73 -: Schwenklager
- 74 -: Gehäuse
- 75 -: Schraubschelle
- 76 -: Radaufhängung
- 77 -: Sensoreinheit
- 78 -: Schwenklager
- 79 -: Gehäusekontur
- 80 -: Einführschlitz
- 81 -: Einführschlitz

## Patentansprüche

1. Radaufhängung für ein Kraftfahrzeug, der eine Sensoreinheit (14a, 14b, 24, 31a, 31b, 42-44, 61, 62, 71, 77) zugeordnet ist, die mit einem Steuergerät gekoppelt ist, **dadurch gekennzeichnet, dass** die Sensoreinheit (14a, 14b, 24, 31 a, 31 b, 42-44, 61, 62, 71, 77) wenigstens einen Dehnungssensor (55) und wenigstens einen Beschleunigungssensor (56) aufweist ein zentrales Teil (16, 32, 51-53) umfasst, von dem aus sich mindestens ein mit einem Gewinde versehener Bolzen erstreckt und das in einem hülsen- oder taschenförmigen Gehäuse (15a, 30, 33a, 65, 66, 74) angeordnet ist.

2. Radaufhängung nach Anspruch 1, **dadurch gekennzeichnet, dass** das Gehäuse (15a, 15b, 30, 33a, 33b, 65, 66, 74) mit einem Fahrwerksbauteil (2, 60, 73, 78) stoffschlüssig verbunden ist.

3. Radaufhängung nach Anspruch 1 oder 2, **dadurch gekennzeichnet, dass** das Gehäuse (15a, 15b, 30, 33a, 33b, 65, 66, 74) mit einem Fahrwerksbauteil (2, 60, 73, 78) formschlüssig verbunden ist.

4. Radaufhängung nach Anspruch 1 oder 2, **dadurch gekennzeichnet, dass** das Gehäuse (15a, 15b, 30, 33a, 33b, 65, 66, 74) mit einem Fahrwerksbauteil (2, 60, 73, 78) kraftschlüssig verbunden ist.

5. Radaufhängung nach Anspruch 1 oder 2, **dadurch gekennzeichnet, dass** das Gehäuse (79) in die Kontur des Fahrwerksbauteils (78) integriert ist.

6. Radaufhängung nach einem der Ansprüche 1 bis 5, **dadurch gekennzeichnet, dass** durch die Sensoreinheit (14a, 14b, 24, 31 a, 31 b, 42-44, 61, 62, 71, 77) zwei Bauteile (2, 18, 72, 73, 78) gekoppelt sind.

7. Radaufhängung nach Anspruch 6, **dadurch gekennzeichnet, dass** durch die Sensoreinheit (14a, 14b, 24) das Fahrwerksbauteil (2) mit einer Radträgereinheit (17) gekoppelt ist.

8. Radaufhängung nach einem der Ansprüche 1 bis 7, **dadurch gekennzeichnet, dass** der Dehnungssensor (55) im Bolzen (16a, 26, 34-37, 45-50, 67) der Sensoreinheit (14a, 14b, 24, 31a, 31b, 42-44, 61, 62, 71, 77) angeordnet ist.

9. Radaufhängung nach einem der Ansprüche 1 bis 8, **dadurch gekennzeichnet, dass** der Bolzen (16a, 26, 34-37, 45-50, 67) aus einem Material ist mit einem Elastizitätsmodul im Bereich von 0,7*10⁵ N/mm² (z. B. Aluminium) bis 2*10⁵ N/mm² (z. B. V2A-Stahl).

10. Radaufhängung nach einem der Ansprüche 1 bis 9, **dadurch gekennzeichnet, dass** der Beschleunigungssensor (56) in dem zentralen Teil (16, 32, 51-53) der Sensoreinheit (14a, 14b, 24, 31a, 31 b, 42-44, 61, 62, 71, 77) untergebracht ist.

11. Radaufhängung nach einem der Ansprüche 1 bis 9, **dadurch gekennzeichnet, dass** der Beschleunigungssensor (56) in einem Bolzen (16a, 26, 34-37, 45-50, 67) untergebracht ist.

12. Radaufhängung nach einem der Ansprüche 1 bis 11, **dadurch gekennzeichnet, dass** die Sensoreinheit (14a, 14b, 24, 31 a, 31 b, 42-44, 61, 62, 71, 77) mehrere Bolzen (16a, 26, 34-37, 45-50) umfasst, die sich vom zentralen Teil (16, 32, 51-53) aus erstrecken und einen rechten Winkel zueinander aufweisen.

13. Radaufhängung nach einem der Ansprüche 1 bis 12, **dadurch gekennzeichnet, dass** mehrere Beschleunigungssensoren vorgesehen sind, deren Erfassungsrichtungen sich voneinander unterscheiden.

14. Radaufhängung nach einem der Ansprüche 1 bis 13, **dadurch gekennzeichnet, dass** ein mehrachsiger Beschleunigungssensor (56) vorgesehen ist.

15. Radaufhängung nach einem der Ansprüche 1 bis 14, **dadurch gekennzeichnet, dass** die Sensoreinheit (14a, 14b, 24, 31 a, 31 b, 42-44, 61, 62, 71, 77) und das Steuergerät drahtgebunden gekoppelt sind.

16. Radaufhängung nach einem der Ansprüche 1 bis 14, **dadurch gekennzeichnet, dass** die Sensoreinheit (14a, 14b, 24, 31 a, 31 b, 42-44, 61, 62, 71, 77) und das Steuergerät drahtlos gekoppelt sind.

17. Radaufhängung nach einem der Ansprüche 1 bis 16, **dadurch gekennzeichnet, dass** die Sensoreinheit (14a, 14b, 24, 31 a, 31 b, 42-44, 61, 62, 71, 77) eine Signalverarbeitungseinheit (57) aufweist.

18. Radaufhängung nach einem der Ansprüche 1 bis 17, **dadurch gekennzeichnet, dass** Signale zwischen der Sensoreinheit (14a, 14b, 24, 31a, 31b, 42-44, 61, 62, 71, 77) und dem Steuergerät analog übertragbar sind.

19. Radaufhängung nach einem der Ansprüche 1 bis 17, **dadurch gekennzeichnet, dass** Signale zwischen der Sensoreinheit (14a, 14b, 24, 31a, 31b, 42-44, 61, 62, 71, 77) und dem Steuergerät digital übertragbar sind.

20. Radaufhängung nach einem der Ansprüche 1 bis 19, **dadurch gekennzeichnet, dass** die Sensoreinheit (14a, 14b, 24, 31 a, 31 b, 42-44, 61, 62, 71, 77) eine Energiequelle (58) aufweist.

21. Radaufhängung nach einem der Ansprüche 1 bis 20, **dadurch gekennzeichnet, dass** die Sensoreinheit (14a, 14b, 24, 31 a, 31 b, 42-44, 61, 62, 71, 77) lösbar an dem Lenker (2) befestigt ist.

22. Radaufhängung nach einem der Ansprüche 1 bis 21, **dadurch gekennzeichnet, dass** die Sensoreinheit (14a, 14b, 24, 31 a, 31 b, 42-44, 61, 62, 71, 77) eine Aufnahme für ein Radlager aufweist.

23. Radaufhängung nach einem der Ansprüche 1 bis 22, **dadurch gekennzeichnet, dass** das Gehäuse (15a, 15b, 33a, 33b, 79) einen Einführschlitz (38, 39; 80, 81) für den Bolzen (16a, 26, 34, 35, 46-49, 67) aufweist.

24. Radaufhängung nach einem der Ansprüche 1 bis 23, **dadurch gekennzeichnet, dass** der Dehnungssensor (55) ein Dehnungsmessröhrchen ist.

25. Radaufhängung nach einem der Ansprüche 1 bis 23, **dadurch gekennzeichnet, dass** der Dehnungssensor (55) ein Dehnungsmessstreifen ist.

26. Radaufhängung nach einem der Ansprüche 1 bis 23, **dadurch gekennzeichnet, dass** der Dehnungssensor (55) ein Messstäbchen ist.

27. Radaufhängung nach einem der Ansprüche 1 bis 23, **dadurch gekennzeichnet, dass** der Dehnungssensor (55) ein induktiver Wegaufnehmer ist.

28. Radaufhängung nach einem der Ansprüche 1 bis 23, **dadurch gekennzeichnet, dass** der Dehnungssensor (55) ein piezoelektrischer Wegaufnehmer ist.

29. Radaufhängung nach einem der Ansprüche 1 bis 28, **dadurch gekennzeichnet, dass** ein ohmscher Beschleunigungssensor (56) vorgesehen ist.

30. Radaufhängung nach einem der Ansprüche 1 bis 28, **dadurch gekennzeichnet, dass** ein induktiver Beschleunigungssensor (56) vorgesehen ist.

31. Radaufhängung einem der Ansprüche 1 bis 28, **dadurch gekennzeichnet, dass** ein kapazitiver Beschleunigungssensor (56) vorgesehen ist.

32. Radaufhängung einem der Ansprüche 1 bis 28, **dadurch gekennzeichnet, dass** ein piezoelektrischer Beschleunigungssensor (56) vorgesehen ist.
